Europäisches Patentamt

European Patent Office

Office européen des brevets

(11) Publication number: **0 574 746 A1**

## EUROPEAN PATENT APPLICATION

(21) Application number: **93108482.6**

(22) Date of filing: **26.05.93**

(51) Int. Cl.5: **H04N 7/13**, H04N 7/137

(30) Priority: **19.06.92 US 901499**

(43) Date of publication of application:
**22.12.93 Bulletin 93/51**

(84) Designated Contracting States:
**AT BE CH DE DK ES FR GB GR IE IT LI LU MC NL PT SE**

(71) Applicant: **Intel Corporation**
**2200 Mission College Blvd.**
**Santa Clara, CA 95052-8119(US)**

(72) Inventor: **Keith, Michael**
**14 Ouail Drive**
**Holland, PA 18966(US)**

(74) Representative: **Patentanwälte Beetz - Timpe - Siegfried Schmitt-Fumian - Mayr**
**Steinsdorfstrasse 10**
**D-80538 München (DE)**

(54) **Method and apparatus for real time compression and decompression of a digital motion video signal using a fixed Huffman table.**

(57) A bitstream representative of at least one digital video image is decoded in real time by providing a code-book index from the bitstream, applying the code-book index to an index table to determine an index value, and comparing the index value to a first predetermined threshold. A single fixed statistical table is used for a plurality of images. If the index value is greater than the predetermined threshold, then at least one current pixel is determined by copying a corresponding previous pixel into the location of at least one current pixel; otherwise the index value is applied to a vector table to determine at least one vector value and a current pixel is determined from the vector value and a corresponding previous pixel. A digital video image is encoded in real time by selecting at least one pixel for encoding and determining at least one difference value between the selected pixel and at least one corresponding previous pixel. An index value corresponding to the location in a table of the difference value is calculated. If the index value is equal to a first predetermined value then a run-length counter is incremented by a second predetermined value and the process is repeated until the index value is not equal to the first predetermined value. The run-length counter is then encoded. If the index value is not equal to the first predetermined value then the index value is encoded.

EP 0 574 746 A1

Field Of The Invention

This invention relates to video signal processing generally and particularly to systems for providing a compressed digital video signal representative of a full color video signal.

Background Of The Invention

In real time video systems, compression and decompression are typically done using the same or similar hardware at roughly the same speed. Real time video systems have often required hardware that is too expensive for a single user, or such systems have sacrificed picture quality in favor of lower cost hardware. This problem has been bypassed by the use of presentation level video systems where the compression is performed on expensive hardware, but the decompression is done by low cost hardware. This solution works only in situations where the single-user system needs only to playback compressed video which has been prepared ahead of time. One method of encoding data is the use of variable length Huffman codes. However, the overhead required for this is a code table for each frame.

It is an object of the present invention to provide a system for compressing and decompressing motion video in real time which may operate on lower cost hardware while maintaining acceptable picture quality.

Further objects and advantages of the invention will become apparent from the description of the invention which follows.

Summary Of The Invention

A method and apparatus for real time compression and decompression of a digital motion video signal is disclosed. According to the present invention, a bitstream representative of at least one digital video image is decoded in real time by first providing a code-book index from the bitstream. The code-book index is applied to an index table to determine an index value which is compared to a first predetermined threshold. A single fixed table is used for any number of different frames. If the index value is greater than the predetermined threshold, then at least one current pixel is determined by copying a corresponding previous pixel into the location of at least one current pixel; otherwise, the index value is applied to a vector table to determine at least one vector value and at least one current pixel is determined from the vector value and a corresponding previous pixel.

In accordance with the present invention, at least one digital video image is encoded in real time by selecting at least one pixel for encoding and determining at least one difference value between the selected pixel and at least one corresponding previous pixel. An index value corresponding to the location in a first table of the difference value is calculated. If the index value is equal to a first predetermined value then a run-length counter is incremented by a second predetermined value and the process is repeated until the index value is not equal to the first predetermined value. The run-length counter is then encoded. If the index value is not equal to the first predetermined value then the index value is encoded.

Brief Description Of The Drawings

Figure 1 is a flow diagram illustrating the operation of a decoder which may decode data according to a preferred embodiment of the present invention.

Figure 2A shows the use of a corresponding previous pixel to perform intra-frame decoding in accordance with a preferred embodiment of the present invention.

Figure 2B shows the use of a corresponding previous pixel to perform inter-frame decoding in accordance with a preferred embodiment of the present invention.

Figure 3 is a flow diagram illustrating the operation of an encoder according to an embodiment of the present invention.

Figure 3A is a flow diagram illustrating the vector quantization and run-length encoding procedures of the encoder of Figure 3.

Figure 3B is a flow diagram illustrating the Huffman encoder of Figure 3.

Figure 3C is a flow diagram illustrating the method of Huffman encoding of the present invention.

Figure 4A is a flow diagram illustrating a video compression system according to the present invention.

Figure 4B is a flow diagram illustrating a video decompression system according to the present invention.

Detailed Description Of The Preferred Embodiment

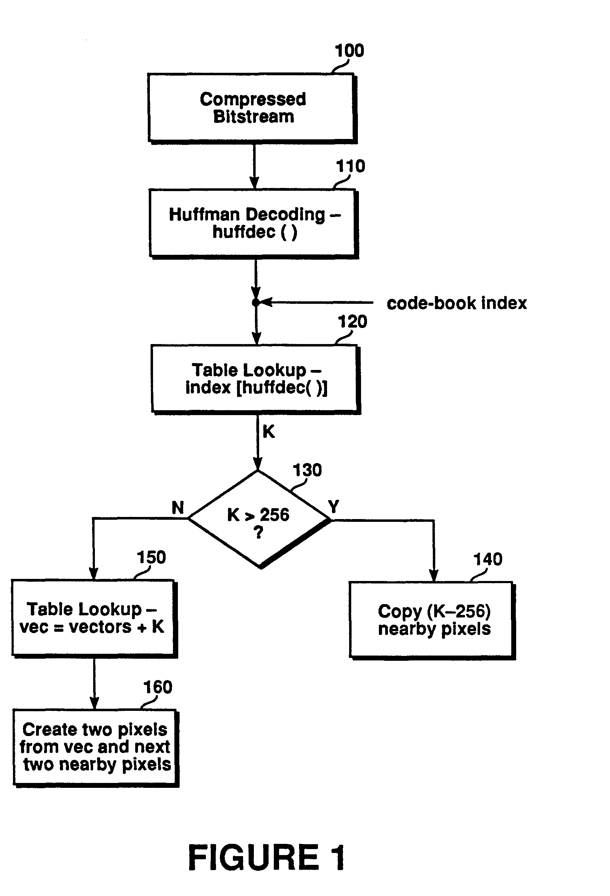

Referring now to Figure 1, there is shown a flow diagram illustrating the operation of a decoder for decoding a bitstream 100 according to a preferred embodiment of the present invention. Bitstream 100 represents a motion video sequence of one or more images which have been encoded in real time. Encoded data from bitstream 100 is applied to Huffman decoder 110 to derive a code-book index representing the position of a code-word within a lexicographically-ordered list of codewords. The code-book index is then used as an entry point to determine an index value from look-up table 120. Comparing means 130 are provided for comparing the index value to a predetermined threshold. If the index value is greater than the predetermined threshold, then copying means 140 determines at least one current pixel by copying a corresponding previous pixel into the location of a current pixel. In a preferred embodiment, copying means 140 calculates the amount that the index value exceeds the predetermined threshold, and then determines that number of current pixels by copying that number of corresponding previous pixels into respective current pixel locations. If the index value is not greater than the predetermined threshold, then the index value is used as an entry point to determine at least one vector value from vector table 150. Means 160 then determines at least one current pixel from a vector value and a corresponding previous pixel. In the preferred embodiment, means 160 uses the index value to determine two vector values which are adjacent in vector table 150. The two vector values are then used by means 160 to determine two adjacent current pixels from two corresponding previous pixels.

The preferred embodiment of the present invention is intended for compression of 8-bit planes of an image. The present invention may also be used with 9-bit YUV images, and other image formats, including 12-bit image formats, may also be used. In the preferred embodiment, the same compression and decompression process steps are applied to each color component of each image in a sequence. As used below, the term image refers to a single color component of an image.

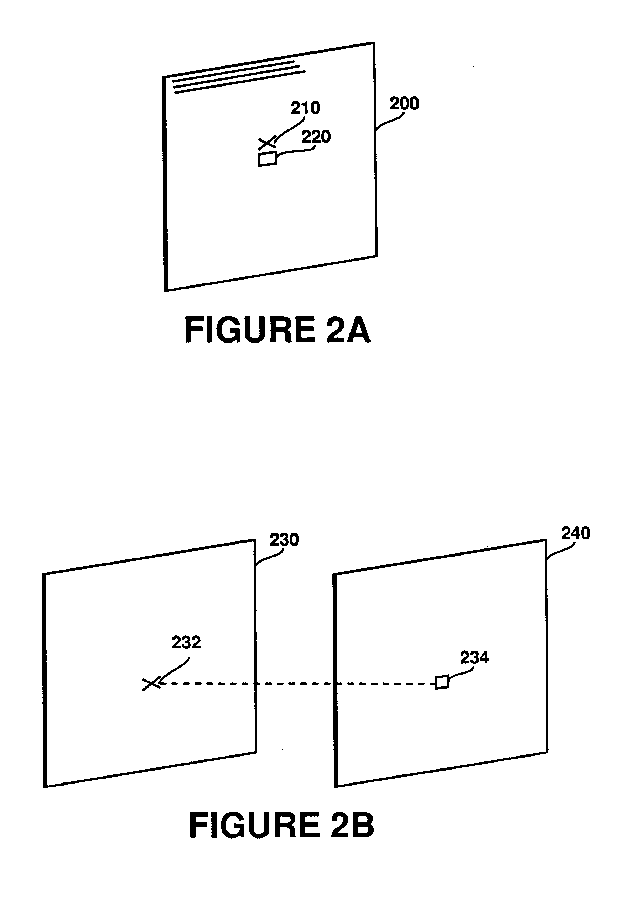

In the preferred embodiment, each image in the sequence is encoded as either a still image or by using inter-frame differences. During the encoding of an image, each pixel in the image is subtracted from a corresponding previous pixel and the differences are encoded. In intra-frame encoding, as shown in Figure 2A, when image 200 is encoded as a still, the corresponding previous pixel 210 is preferably the pixel directly above the current pixel 220 being encoded. As shown in Figure 2B, if image 240 is encoded using inter-frame differences, the corresponding previous pixel 232 is preferably the pixel in previous image 230 located in the same bitmap position as current pixel 234 being encoded. In either case, there is a difference image whose values tend to cluster around zero which is encoded. Difference images are preferably encoded using two-dimensional vector quantization, with some run-length encoding added to help encode large areas of zeros efficiently.

In a preferred embodiment, bitstream 100 includes the following fields for each frame in a sequence: StillFlag, DataSize, ImageHeight, ImageWidth, Flags, VectorSet, a Huffman table descriptor for the image, and Huffman encoded data for the Y, V, U planes. The StillFlag field indicates whether the image is a still, DataSize indicates the size of the bitstream in bits, and ImageHeight and ImageWidth give the size of the decoded image in pixels. The Flags field indicates whether the data in the bitstream represents an image that has been encoded at full resolution, half vertical resolution, half horizontal resolution, or half vertical and half horizontal resolution. Such half resolution images may be obtained prior to encoding by subsampling the full resolution image in one or both dimensions. In the preferred embodiment, an image for encoding is considered to be at full resolution if its height is ImageHeight pixels and it width is ImageWidth pixels; it is considered to be at half vertical resolution if its height is ImageHeight pixels and its width is ImageWidth/2 pixels; it is considered to be at half horizontal resolutions if its height is ImageHeight/2 pixels and its width is ImageWidth pixels; and it is considered to be at half vertical and half horizontal resolution if its height is ImageHeight/2 pixels and its width is ImageWidth/2 pixels.

In a preferred embodiment, the VectorSet field is a number from 0 to 7 which is used to select one of eight vector sets to use for decoding an image. Each of the vector sets contains 128 ordered pairs which may be thought of as points defined by X and Y coordinates. In all the vector sets, the ordered pairs are clustered about the point (128, 128). However, the average distance between the ordered pairs and the center point (128, 128) varies among the vectors sets. In VectorSet 0, the ordered pairs are closely clustered about (128, 128). VectorSet 0 thus corresponds to the lowest quantization level. As one moves from VectorSet 0 to VectorSet 7, the ordered pairs cluster less closely around (128, 128). VectorSet 7 thus corresponds to the highest quantization level.

The eight vector sets used in the preferred embodiment of the present invention are attached hereto as an appendix hereto. In the preferred embodiment, the vectors have arithmetic values in the range -128 to 127. The vector values shown in the Appendix have 128 added to them, so that they are in the range 0 to

EP 0 574 746 A1

255. Other vector sets may be used without departing from the spirit of the present invention.

In a preferred embodiment, the value of the VectorSet field may vary from image to image, thus allowing the encoder to vary the quantization level between images. In this embodiment, the vector set selected by the VectorSet field is used to decode the Y component image. The vector set selected by the value VectorSet/2 is used for the U, V components. Better quantization is normally required for encoding the U, V component images because these components are typically subsampled spatially. In an alternate embodiment, a single vector set may be used to encode and decode all images in a sequence.

A Huffman table descriptor for each image may also be included in the format of bitstream 100. The Huffman table is preferably of the form shown in Table I below:

```
    0[xx...x]
   10[xx...x]



  110[xx...x]
 1110[xx...x]
11110[xx...x]
111110[xx...x]
1111110[xx...x]
11111110[xx...x]

   Table I
```

Byte K in the huffman table descriptor indicates how many "x bits" there are in row K of the above table. The Huffman decoding operation collects bits from the bitstream one at a time until a code word in a codebook is recognized. Huffman decoder 110 returns a code-book index representing the position of a code-word within a lexicographically-ordered list of code words.

Following the above header information in bitstream 100 is the Huffman encoded data describing the Y plane. Data representing the V and U planes immediately follow the Y plane data. In the preferred embodiment, the V and U data describe a bitmap which is 1/4 the horizontal size and 1/4 the vertical size of the Y bitmap. The final result is a YUV 4:1:1 image which may be displayed directly by a display processor, or converted to some other display format if desired.

Decoding Procedure

The decoding procedure for a still image may be described by the c-language pseudo code in Table II below. In the pseudo code, the function huffdec() performs a huffman decode operation as described above and returns an unsigned integer representing the code-book index:

4

Define

> Width = ImageWidth, divided by 2 depending on the
> value of Flags
> Height = ImageHeight, divided by 2 depending on
> the value of Flags

Then:

```
        unsigned char *curr,*prev;
        unsigned int *vec;

        for (x=0; x<Width; x++) // Fill first line with 128's
                bitmap[0][x] = 128;

        for (y=0; y<Height; y++) // for each line of image
                {
//      point to beginning of current line and previous line

                curr = &bitmap[y][0];
                prev = &bitmap[y - (y != 0)][0];

                for (x=0; x<Width; x+=2) // for each pair of
//                                                      pixels
                        {
                        k = index[huffdec()];

//      Now do either a run-length of 0's or a single vector,
//      depending on the value of k.

                        if (k > 256) // run-length of 0's?
                        {
                                for (i=0; i<k-256; i++)
                                        *curr++ = *prev++;
                                x += k-258;
                        }
                        else // apply a single vector
                        {
                                vec = vectors + k;
                                *curr++ = clamp (*prevv++ + *vecc++);
                                *curr++ = clamp (*prevv++ + *vecc++);
                        }
                        }
                }
```

where:

'vectors' is a pointer to the vector set to use for
this image, and index[] is the following array:

```
index[] = {
  2,    4, 258,    6,    8, 260,  10,  12,
262, 264,  14,  16, 266,  18,  20,  22,
```

```
 24,   26,   28, 268,   30,   32, 270, 272,
 34,   36,   38,   40, 274,   42,   44, 276,
 46,   48, 278,   50,   52, 280,   54,   56,
282,   58,   60, 284,   62,   64, 286,   66,
 68, 288,   70,   72,   74,   76,   78,   80,
 82,   84,   86,   88,   90,   92,   94,   96,
 98, 100, 102, 104, 106, 108, 110, 112,
114, 116, 118, 120, 122, 124, 126, 128,
130, 132, 134, 136, 138, 140, 142, 144,
146, 148, 150, 152, 154, 156, 158, 160,
162, 164, 166, 168, 170, 172, 174, 176,
178, 180, 182, 184, 186, 188, 190, 192,
194, 196, 198, 200, 202, 204, 206, 208,
210, 212, 214, 216, 218, 220, 222, 224,
226, 228, 230, 232, 234, 236, 238, 240,
242, 244, 246, 248, 250, 252, 254,
}
```

and clamp(x) is a function defined as follows:

```
clamp(x) = 0     if x<128
           x-128 if 128 >= x < 384
           255   if x >= 384
```

Table II

After executing the above procedure, the decoder then scales the image up horizontally and/or vertically by a factor of two, according to the Flags field in the header.

The decoding procedure for an inter-frame (non-still) image is similar to that described in Table II, and is obtained by deleting the first 2 lines of code, and changing the line

```
prev = &bitmap[y - (y != 0)][0];
```

to

```
prev = &prev_bitmap[y][0];
```

Scalability

By manipulating the Flags and StillPeriod parameters in the encoder, it is possible to create real time video files which can be scalably decoded. This permits reasonable-quality playback on a typical microprocessor and better quality on a higher-performance video signal processor chip. In a preferred embodiment, real time video files which can be scalably decoded are created by setting Flags so that half vertical and half horizontal resolution are selected. The decoder would therefore normally be expected to scale up the image by 2x both vertically and horizontally after decoding. According to the present invention, if a sequence of 256x240 images is compressed at 128x120 resolution, it can be decompressed and displayed as a sequence of 128x120 images on a typical micro-processor. By opting not to interpolate the 128x120 images back up to 256x240 images, a typical micro-processor can be used to reproduce image sequences encoded in real time with a reasonable degree of quality. The image quality level can be improved through the use of a higher-performance video signal processor which reproduces the sequence by decoding and then interpolating back up to 256x240 images. Thus, the same encoded sequence can be reproduced at different quality levels depending on the limitations of the decompression hardware. Another aspect of real time video files which can be scalably decoded allows a typical micro-processor system to use a VGA for display whereas a video signal processor system may use a 24-bit-color display. The micro-processor system might choose to display in monochrome to avoid YUV-to-VGA-clut conversion.

In a still further aspect of scalability, during compression a user may set the parameter "StillPeriod" to P, thus requiring every Pth image to be encoded as a still. The other images may then be encoded using inter-frame differences. P can typically be set quite small without adversely affecting image quality. By compressing a sequence with P = 3, the processing requirements for a micro-processor type system can be reduced without adversely affecting image quality. For example, decompressing and displaying still images using a known processor may typically yield a 10fps display. This frame rate can be increased smoothly from 10fps to 30fps if P = 3.

Encoding Procedure

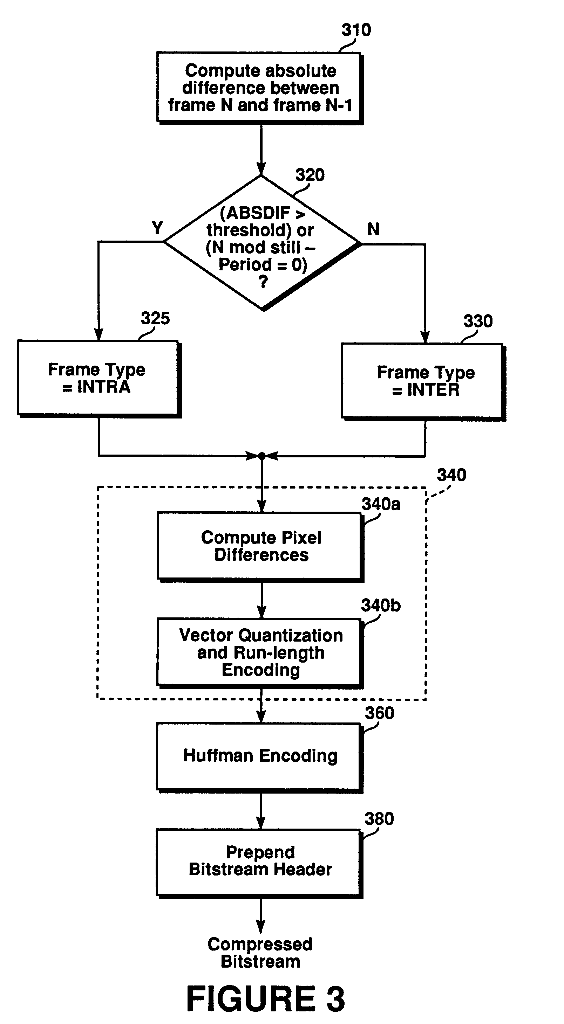

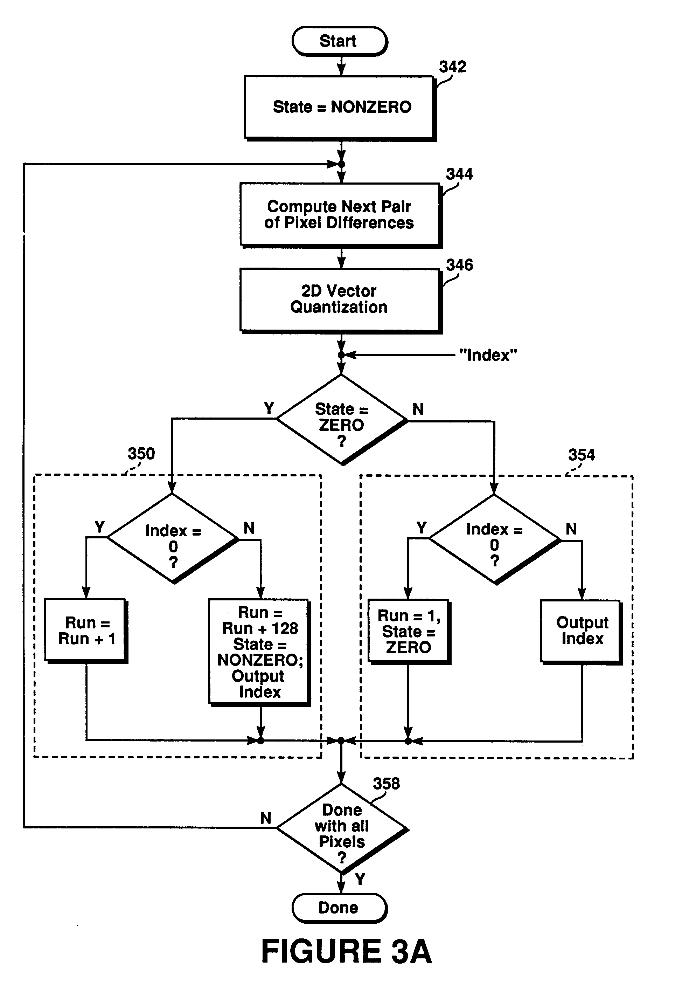

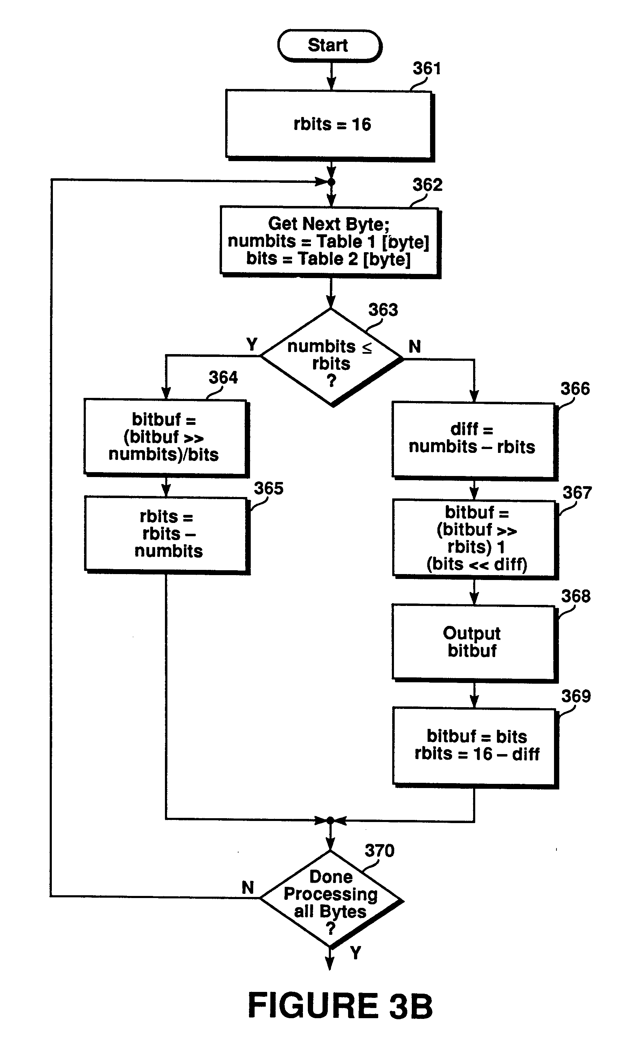

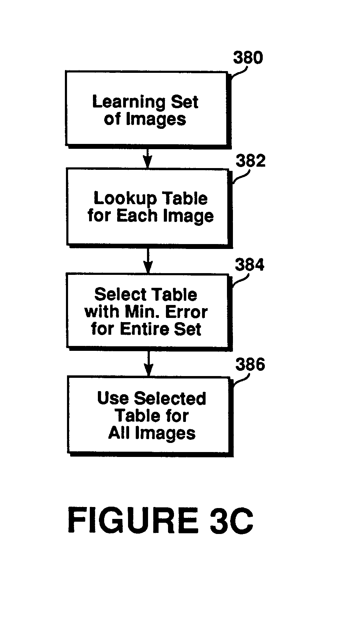

Referring now to Figure 3, there is shown an overall flow diagram for encoding an image in real time according to a preferred embodiment of the present invention.

The first step is determining whether to encode the image as an intra-frame (a still image) or an inter-frame (an image encoded relative to the previous image in the sequence). For this purpose, a user parameter called StillPeriod is used. The user sets StillPeriod to a value K to force every Kth image to be encoded as a still (INTRA) image. For efficiency of encoding, an encoder may use an INTRA frame even for images in between every-Kth image. For example, if there is a scene cut or if the video enters a period of very high motion, then an intra-frame image will be more efficient to encode than an inter-frame, because the correlation between adjacent images will be too small to be advantageous.

As shown in Figure 3, means 310 first computes the absolute difference (ABSDIF) between frame N and the previous frame (N-1). This involves summing the absolute value of the differences between all pixels in the two images. For efficiency of computation it is preferable to only use a subset of the pixels in the two images for the purpose of comparison. This provides as nearly an accurate measure of the difference between the two images at a greatly reduced computational cost. After this computation, means 320 (i) compares the absolute difference between frame N and a previous frame N-1 with a predetermined threshold, and (ii) computes the value of N mod StillPeriod. If means 320 determines (i) that the absolute difference is greater than the predetermined threshold or (ii) that (N mod stillPeriod) is zero, then the frame type is set to INTRA by means 325. Otherwise, the frame type is set to INTER by means 330. In alternate embodiments, parameters other than the absolute difference between all pixels in frames N and N-1 may be used in determining how to set the frame type. For example, the mean-square error between pixels in frames N and N-1 or the relative difference between such pixels may be used.

After determining whether to encode as an INTRA or INTER image, means 340a next computes the pixel differences which are to be encoded. As described in the discussions of Figures 2A, 2B above, if the image is an INTRA, each pixel has subtracted from it the value of the pixel immediately above it in the same image. For the top row, a "phantom value" of 128 is used for these pixels. If the image is an INTER image, each pixel has subtracted from it the value of the pixel in the same spatial location in the previous image. The pixel differences are then vector-quantized and run-length encoded by means 340b. Further details of this vector-quantization and run-length encoding procedure are shown in Figure 3A and will be described below. The output of means 340b is a string of bytes with values corresponding to the values in the index[] array (divided by 2). This string of bytes is Huffman encoded by means 360 into variable-length codes. Further details of Huffman encoder 360 are shown in Figure 3B and will be described below. In the final encoding step, means 380 prepends the proper bitstream header.

Referring now to Figure 3A, there is shown a flow diagram illustrating the operation of means 340 of Figure 3. In particular, Figure 3A shows the run-length encoding and vector quantization procedures of means 340b. The operation of means 340 is performed with a 2-state machine. The two states are denoted as ZERO and NONZERO. The ZERO state indicates that the system is in the middle of processing a run of 0 values. The NONZERO state indicates that non-zero values are being processed. The purpose of the two states is to allow for efficient encoding of consecutive zero differences.

In the first step of Figure 3A, means 342 initializes the state machine to the NONZERO state. Next, means 344 computes the next pair of pixel differences. In the preferred embodiment, the image is processed in normal raster-scan order, from top to bottom and left to right within each line. The "next pair" of pixels means the next two pixels on the current scan line being processed. As stated above, the differences are taken with the pixels immediately above these pixels (if this image is being encoded as an INTRA) or with the pixels in the same spatial location in the previous image (if this image is being encoded as an INTER image). Since these two values represent pixel differences, they will typically be small, or close to zero.

In the next step, means 346 operates to 2-D vector-quantize the two pixel difference values into a single number (index) between 0 and 127. The possible index values correspond to 128 points in 2-D space known as a "vector set". Geometrically, a vector set represents 128 points in the 2-D square bounded by the values -255 and 255 which have been chosen as reasonable approximations to every point in the square. Thus, if the two pixel difference values are denoted by d1 and d2, they can be represented as a point in the 2-D square with coordinates (d1, d2). The vector quantization operation attempts to choose the closest (in Euclidean distance) of the 128 representative points to be used to encode the point (d1, d2). Since the vector set is relatively small, this choosing operation can be done quickly using a lookup table. According to this procedure, the values d1 and d2 are first limited to the range -127 to +127. Then, the quantity 128 is added to produce values in the range 0 to 255. Next, a value p is calculated according to equation (1) below:

$$p = (d1 \gg 2) \mid (d2 \gg 2 \ll 6) \qquad (1)$$

The value of p is in the range 0 to 4095. The value at position 'p' in a 4096-entry lookup table is then used to get the index corresponding to the closest representative point in the vector set corresponding to (d1, d2). Although a slight inaccuracy in the computation is introduced by not using the lower 2 bits of d1 and d2, without this step the lookup table would be 64K instead of 4K. A separate lookup table is required for each of the eight vector sets for a total size of 32K bytes. During encoding, the degree of quantization used (e.g., the VectorSet value chosen) is varied by known feedback processes which monitor the size of encoded images in the bitstream.

The remainder of Figure 3A maintains the value of a variable 'run' which indicates how many consecutive index values of 0 have been produced. When a run of 0 values is ended, means 350 outputs the value 128 + run. For each non-zero index, means 354 outputs the index value itself. Means 358 functions to repeat the process from (starting from means 344) until all pixels have been processed.

The encoding procedure shown in Figures 3,3A for a still (INTRA) image can be described by the c-language pseudo code in Table III below:

```
Define

    Width = ImageWidth, divided by 2 depending on the
            value of Flags
```

8

```
Height = ImageHeight, divided by 2 depending on the
        value of Flags
Then

unsigned char *curr, *prev,grey[XMAX];
unsigned char *lookup

for (x=0; x<Width; x++) // make a line of 128's
  grey[x] = 128;

state = NONZERO;

for (y=0; y<Height; y++) // for each line of image
{
   curr = &bitmap[y][0];
   if (y > 0)
     prev = &bitmap[y-1][0];
   else
     prev = &grey[0];

   for (x=0; x<Width; x+=2)
   {
     d1 = clamp(*curr++ - *prev++ + 128);
     d2 = clamp(*curr++ - *prev++ + 128);
     index = lookup[  (d1 >> 2)  |  (d2 >> 2 << 6)  ];

     if  (state == ZERO)
     {

       if (index == 0)
         run++;
       else
         { huffenc(run + 128); huffenc(index);
           state = NONZERO; }
     }
     else if (state == NONZERO)
     {
       if (index == 0)
         { run = 1;   state = ZERO; }
       else
         huffenc(index);
     }
   }
}

where

'lookup' is a pointer to the 4K difference-pair-to-
 vector-index lookup table for the current vector set;

huffenc(x) is a function to output the appropriate
Huffman codeword such that index[huffdec(huffenc(x))]
= x.
```

<div align="center">TABLE III</div>

The encoding procedure for an inter-frame image is similar to that described in Table III, and is obtained by deleting the first 2 lines of code, and changing the lines

```
if (y > 0)
        prev = &bitmap[y-1][0];
else
        prev = &grey[0];
```

to

```
prev = &prev_bitmap[y][0];
```

Referring now to Figure 3B, there is shown a flow diagram illustrating the Huffman encoding of the byte values output by means 340b. The Huffman encoding step replaces the fixed 8-bit codes with a statistically-optimized set of variable-length codes. Before the Huffman encoding begins, two tables (table1 and table2) are precalculated to specify, for each 8-bit value to be Huffman encoded; the number of bits in the Huffman code and the actual bits themselves. The bits are top-justified in a 16-bit value. The Huffman encoding operation is assisted by a 16-bit register called 'bitbuf' in which bits are collected. Another register, 'rbits', is used to indicate how many unused bits there are remaining in 'bitbuf'. Means 361 initially sets rbits to 16, since 'bitbuf' is initially empty.

Means 362 reads the next byte of data and looks up 'numbits' and 'bits' in the two tables. Decision block 363 determines whether there is room enough in 'bitbuf' to hold the entire Huffman code word, i.e., is numbits <= rbits? If so, then 'bits' is ORed into 'bitbuf' by means 364, and 'rbits' is reduced by the value of 'numbits' by means 365. If it is determined by decision block 363 that the bits do not fit in 'bitbuf', then the encoder puts as many bits as will fit into 'bitbuf', outputs 'bitbuf', puts the remaining bits into bitbuf, and sets rbits = 16 - diff. More particularly, means 366 determines a value diff by subtracting rbits from numbits. Means 367 puts as many bits as will fit into bitbuf by ORing (bitbuf $\gg$ rbits) with (bits $\ll$ diff). Means 368 then outputs bitbuf and means 369 sets bitbuf to bits and rbits to 16 minus diff.

Decision block 370 determines whether the processing of all bytes is completed. If it is determined that all bytes have not been processed, the above process (starting with means 362) is repeated.

Referring now to Fig. 3C, there is shown a flow diagram illustrating an additional preferred embodiment of the system of the present invention. In this embodiment fixed 8-bit codes are replaced with a set of statistically-optimized variable-length codes using Huffman encoding as previously described. However, in this embodiment a single fixed lookup table is provided for a plurality of images rather than using an individually optimized lookup table for each frame. This single fixed lookup table may be determined by statistical optimization performed upon a set of training images which are typical of the type of images or frames to be encoded. Thus, the lookup table used to encode a frame is not necessarily optimized for the particular frame being encoded. This may cause some inefficiency in the encoding process. However, this inefficiency is traded off for the greatly simplified processing provided by not determining and transmitting an individual lookup table for each frame.

The fixed table may be used for any number of differing frames. It is possible, for example, to determine a fixed table which is optimized for animated images and use this table for all animated images. It is also possible to determine a fixed table which is optimized for real life images and use it for all real life images. Additionally, it has been determined that the method of this embodiment provides satisfactory results if a single statistical optimization is performed to provide a single fixed Huffman table for all possible images which may be processed. For example, a training set of images may be selected to include animated images as well as real life images and the single fixed table produced thereby may be used for both types of images.

It will be understood that the system of this invention may use any method of statistical optimization which yields a fixed Huffman table which may be applied to a plurality of differing frames when the plurality of frames is encoded and decoded. One method of statistical optimization involves using the optimized tables determined for a learning set of images as shown in block 370. It is well understood by those skilled in the art how to obtain the individual optimized tables for the individual frames of the learning set. In the method of the present invention, this optimization is performed on the frames of the training set to provide an optimized lookup table for each image in the training set, thereby providing a set of lookup tables as shown in block 382. Conventional statistical methods may then be used to select that lookup table from this set of lookup tables which gives the least error when applied to all of the frames in the learning set as shown in block 384. The selected table may then be used on all images as the fixed table of the method of the present invention as shown in block 386.

10

Each encoded image is provided with an image header containing a flag bit indicating whether the image was encoded using a variable look-up table or a fixed look-up table. As shown in Table I, in the case of variable look-up tables the descriptor indicates how many "x bits" there are in each row of the table. The corresponding format for the number of "x bits" for the eight rows of a fixed table may be: 2,3,3,4,4,4,6,6.

SYSTEM DETAILS

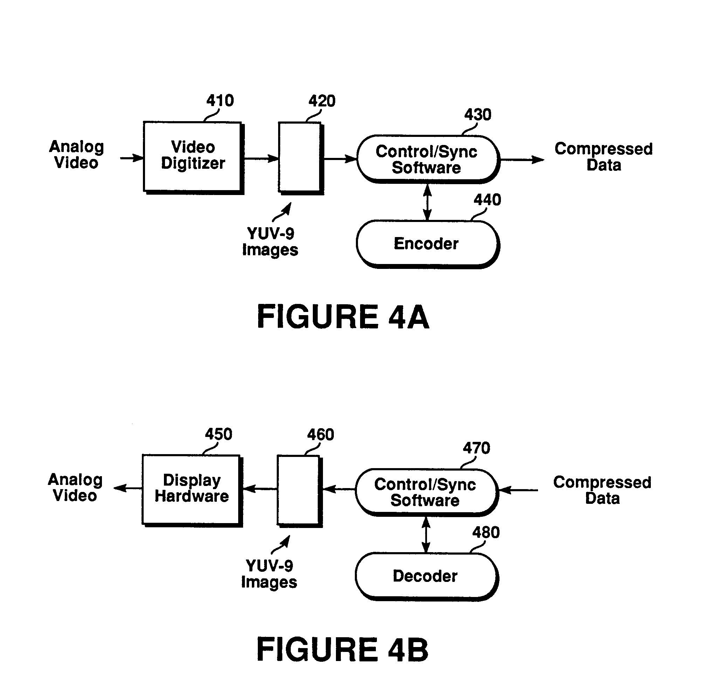

Two overall system block diagrams are shown in Figures 4A, 4B. Figure 4A shows a block diagram for recording and Figure 4B shows a block diagram for playback; however, the same system can be used (even simultaneously) for either recording (encoding) or playback (decoding).

Referring now to Figure 4A, the analog video is first digitized by video digitizer 410, and the digital images are stored in memory 420 in "YUV-9" format. This format consists of three planes of 8-bit pixels: one Y plane, one U plane, and one V plane. The U and V planes are stored at 1/4 the resolution in each dimension compared to the Y plane. Means 430 includes a set of control and synchronization routines which examine the images as they are digitized and invoke encoder 440 as appropriate in order to compress successive frames of the video. The bitstreams are then output to memory, from which they can be stored to hard disk or sent over a network.

Referring now to Figure 4B, a playback system according to the present invention is shown. The playback diagram of Figure 4B is the inverse of the record diagram shown in 4A. Thus, means 470 accepts as input compressed data and invokes decoder 480 as appropriate to decompress successive frames of the video. The decompressed video is stored in memory 460 in YUV-9 format. Display hardware 450 produces analog video from the YUV-9 data.

In the preferred embodiment, digitizer 410 can be programmed to digitize horizontally or vertically at any resolution. In effect, this means that the digitizer can be used to do part of the compression process. By programming the digitizer to a lower resolution, there will be less data for the encoder to compress and the final data size will be smaller. In addition, digitizer 410 may dynamically alter the digitizer resolution (either horizontally or vertically) when the video becomes "hard" to compress. A method and apparatus for dynamically altering resolution based on image complexity is implemented in U.S. Patent Application entitled, "Method and Apparatus For Encoding Selected Images At Lower Resolution" by A. Alattar, S. Golin and M. Keith, filed March 25, 1992, the serial number of which is not yet known, which application is assigned to the assignee of the present application and the contents of which are hereby incorporated herein by reference.

In the real time video system described above, the encoder takes incoming digitized images, compresses them, and outputs the compressed bitstream to a buffer in memory for extraction by the application. The simplistic view of the system assumes that everything works "ideally", so that a new compressed frame is generated exactly F times per second, where F is the desired frame rate requested by the user. However, there are at least two conditions which typically occur to make the operation of the system less than ideal:

(1) The analog video source may disappear for a period, thus precluding new digitized images from being obtained by the digitizer; and

(2) The application may not extract compressed frames from the buffer fast enough, which means that the encoding system gets "stalled" by the inability to output more compressed frames (caused by the output buffer being full).

In either case, if the encoder simply fails to output frames, this will result in a loss of time synchronization. For example, if the system is encoding at 30 frames per second, the playback system would expect to get 900 frames in 30 seconds. If, due to conditions (1) or (2), less than 900 frames are generated (for example, 840), then upon playback the playback system will play these 840 frames at 30 frames per second, and the playback of these frames will occupy only 28 seconds. This is not acceptable, since the video information upon playback will not occupy the same amount of real time that it did during recording. This will be evident to the viewer by, for example, loss of audio/video synchronization.

A solution to this problem is presented by what will be termed "sync frames". During encoding, means 430 keeps track of real time using a clock signal. It attempts to generate F compressed data frames per second, as requested by the user, and it monitors how well it is doing. If at any point it determines that it is behind (i.e., fewer frames have been generated so far than there should be), it inserts a "sync frame" into the compressed buffer. A "sync frame" is a compressed data frame that appears in the bitstream just like a normal compressed frame (and so travels through the record and playback systems without any special handling) but which can be detected by the playback process as special.

The sync frame consists of the bitstream header (described above) with the DataSize field set to 128 and the other fields set to the appropriate values. A sync frame in effect counts the passage of time without causing a new image to appear on the screen. When the decoder encounters a sync frame, it simply copies the previous image to the current image bitmap. This results in no change to the display but the proper passage of time, so that accurate time synchronization results. Thus, if a system bottleneck occurs so that only 840 "real" compressed frames are created during a 30-second period, then means 430 will insert 60 sync frames. Thus, over the 30-second period there will be exactly 900 frames, as desired, but 60 of them will be sync frames. On playback, there will be some visual anomalies when the sync frames are processed, but exact time synchronization will be maintained.

The present invention may be implemented in real time (both compression and decompression) using an Intel model i750PB processor. Other processors, including Intel 386/486 processors, may be used to scalably decode video data which has been encoded accorded to the present invention.

The present invention may be embodied in other specific forms without departing from the spirit or essential attributes of the invention. Accordingly, reference should be made to the appended claims, rather than the foregoing specification, as indicating the scope of the invention.

**Claims**

1. A method for encoding digital video signals in real time, said digital video signals representing at least first and second differing video images, comprising the steps of:
   (a) providing a training set formed of a plurality of video training images;
   (b) providing a single fixed lookup table in accordance with said training set, said single fixed lookup table being representative of the video training images of said training set;
   (c) selecting a first pixel from said first video image and a second pixel from said second video image for encoding said first and second pixels;
   (d) determining a first location within said single fixed lookup table in accordance with said first pixel;
   (e) determining a second location within said single fixed lookup table in accordance with said second pixel;
   (f) encoding said first and second pixels in accordance with said first and second locations respectively.

2. The method for encoding digital signals of Claim 1, comprising the further steps of:
   (g) determining at least one difference value between said first selected pixel and at least one corresponding previous pixel;
   (h) calculating an index value corresponding to said first location in said fixed lookup table of said at least one difference value;
   (i) if said index value is equal to a first predetermined value then
       (1) incrementing a run-length counter by a second predetermined value;
       (2) repeating steps (g) - (i)(1) until said index value is not equal to said first predetermined value;
       (3) incrementing said run-length counter by a third predetermined value;
       (4) encoding said run-length counter; and
   (j) if said index value is not equal to said first predetermined value then encoding said index value.

3. The method for encoding digital signals of Claim 2, wherein steps (a) - (f) are used to encode said run-length counter in step (i)(4) and said index value in step (j).

4. The method for encoding digital signals of Claim 2, wherein said first predetermined value is zero.

5. The method for encoding digital signals of Claim 2, wherein step (g) comprises selecting first and second pixels for encoding, step (h) comprises the steps of:
   (1) determining a first difference value between said first selected pixel and a first corresponding previous pixel;
   (2) determining a second difference value between said second selected pixel and a second corresponding previous pixel; and
       step (i) comprises quantizing said first and second difference values into an index value corresponding to the location of said first difference value in a first table, wherein said first and second difference values are adjacent to each other in said first table.

6. The method for encoding digital signals of Claim 1, in a processing system for receiving and processing input video data wherein steps (a) and (b) are performed independently of said processing system prior to said receiving of said input video data and steps (c)-(f) are performed upon said input video data by said processing system after said receiving of said input video data.

7. The method for encoding digital signals of Claim 1, wherein step (b) comprises providing a table representative of statistical information about said video images of said training set.

8. The method for encoding digital signals of Claim 1, wherein said first and second images differ from said training images.

100

**Compressed Bitstream**

110

**Huffman Decoding – huffdec ( )**

code-book index

120

**Table Lookup – index [huffdec( )]**

K

130

**K > 256 ?**

N          Y

150

**Table Lookup – vec = vectors + K**

140

**Copy (K–256) nearby pixels**

160

**Create two pixels from vec and next two nearby pixels**

# FIGURE 1

# FIGURE 2A

# FIGURE 2B

FIGURE 3

Start

State = NONZERO — 342

Compute Next Pair of Pixel Differences — 344

2D Vector Quantization — 346

"Index"

State = ZERO ?

**Y** — 350

Index = 0 ?

**Y**

Run = Run + 1

**N**

Run = Run + 128 State = NONZERO; Output Index

**N** — 354

Index = 0 ?

**Y**

Run = 1, State = ZERO

**N**

Output Index

Done with all Pixels ? — 358

**N**

**Y**

Done

# FIGURE 3A

```
                    ┌─────────┐
                    │  Start  │
                    └─────────┘
                         │
                         ▼                    361
              ┌────────────────────┐
              │     rbits = 16     │
              └────────────────────┘
                         │
         ┌───────────────●
         │               │                    362
         │    ┌────────────────────┐
         │    │   Get Next Byte;   │
         │    │ numbits = Table 1 [byte] │
         │    │  bits = Table 2 [byte]   │
         │    └────────────────────┘
         │               │
         │               ▼         363
         │           ╱─────────╲
         │      Y   ╱  numbits ≤ ╲   N
         │   ┌─────╱     rbits    ╲─────┐
         │   │     ╲       ?      ╱     │
         │   │      ╲─────────╱        │
         │   ▼ 364                     ▼ 366
         │ ┌──────────────┐      ┌──────────────┐
         │ │   bitbuf =   │      │    diff =    │
         │ │  (bitbuf >>  │      │ numbits - rbits │
         │ │ numbits)/bits│      └──────────────┘
         │ └──────────────┘             │
         │        │ 365                 ▼ 367
         │ ┌──────────────┐      ┌──────────────┐
         │ │   rbits =    │      │   bitbuf =   │
         │ │   rbits -    │      │  (bitbuf >>  │
         │ │   numbits    │      │    rbits) 1  │
         │ └──────────────┘      │ (bits << diff)│
         │        │              └──────────────┘
         │        │                     │
         │        │                     ▼ 368
         │        │              ┌──────────────┐
         │        │              │    Output    │
         │        │              │    bitbuf    │
         │        │              └──────────────┘
         │        │                     │
         │        │                     ▼ 369
         │        │              ┌──────────────┐
         │        │              │ bitbuf = bits │
         │        │              │ rbits = 16 - diff │
         │        │              └──────────────┘
         │        │                     │
         │        └─────────●───────────┘
         │                  │
         │                  ▼ 370
         │              ╱─────────╲
         │         N   ╱   Done    ╲
         └────────────╱ Processing  ╲
                      ╲ all Bytes   ╱
                       ╲    ?      ╱
                        ╲─────────╱
                             │ Y
                             ▼
```

# FIGURE 3B

380

Learning Set
of Images

382

Lookup Table
for Each Image

384

Select Table
with Min. Error
for Entire Set

386

Use Selected
Table for
All Images

# FIGURE 3C

410 420 430

Analog
Video → Video Digitizer → → Control/Sync Software → Compressed Data

YUV-9 Images

440

Encoder

# FIGURE 4A

450 460 470

Analog
Video ← Display Hardware ← ← Control/Sync Software ← Compressed Data

YUV-9 Images

480

Decoder

# FIGURE 4B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 985 768 (SUGIYAMA)<br>* column 1, line 1 - column 4, line 51 *<br>--- | 1 | H04N7/13<br>H04N7/137 |
| A | US-A-4 813 056 (FEDELE)<br>* column 1, line 20 - column 11, line 2 *<br>* column 15, line 61 - column 17, line 43 *<br>--- | 2-4 | |
| A | SIGNAL PROCESSING : IMAGE COMMUNICATION<br>vol. 2, no. 1, May 1990, AMSTERDAM<br>pages 81 - 94<br>THYAGARAJAN 'Encoding of videoconferencing signals using VDPCM'<br>* paragraph 1 *<br>* paragraph 3 -paragraph 4 *<br>--- | 1,5-8 | |
| A | COMMUNICATIONS OF THE ACM<br>vol. 34, no. 4, April 1991, NEW-YORK<br>pages 64 - 78<br>HARNEY ET AL. 'The i750 Video Processor : A Total Multimedia Solution'<br>* page 67, left column, line 47 - middle column, line 23 *<br>* page 75, left column, line 12 - page 76, right column, line 41 *<br>--- | 5 | TECHNICAL FIELDS SEARCHED (Int. Cl.5 )<br><br>H04N |
| A | IEEE TRANSACTIONS ON COMMUNICATIONS<br>vol. COM28, no. 1, January 1980,<br>pages 84 - 95<br>LINDE ET AL. 'An Algorithm for Vector Quantizer Design'<br>* page 86, left column, line 22 - page 89, right column, line 8 *<br><br>----- | 1,6-8 | |

The present search report has been drawn up for all claims

| Place of search | Date of completion of the search | Examiner |
|---|---|---|
| THE HAGUE | 21 JULY 1993 | POIRIER, J. |